# EUROPEAN PATENT APPLICATION

(11) **EP 2 562 012 A1**
(43) Date of publication of application: **27.02.2013**
(21) Application number: 12181287.9
(22) Date of filing: 22.08.2012
(51) Int. Cl.: B60C 23/04

(54) **Valve ID registration system**

(30) Priority: 24.08.2011 JP 2011182483
(71) Applicant: KABUSHIKI KAISHA TOKAI RIKA DENKI SEISAKUSHO, Niwa-gun, Aichi 480-0195 (JP)
(72) Inventor: Shibata Yasuhiro, Niwa-gun,, Aichi 480-0195 (JP); Kumagai, Katsuhide, Niwa-gun,, Aichi 480-0195 (JP); Mochizuki, Shingo, Niwa-gun,, Aichi 480-0195 (JP); Matsushita, Masahiro, Niwa-gun,, Aichi 480-0195 (JP)
(74) Representative: TBK

(57) **Abstract**

A valve ID registration system includes a sudden pressure decrease detector (31 b) that detects a sudden pressure decrease in the tire and a transmission unit (31c, 32) that transmits a valve signal. When the detector (31b) detects a sudden pressure decrease, the transmission unit transmits the valve signal, which includes sudden pressure decrease information, with more frames than normal. A sudden pressure decrease monitoring unit (4c) monitors the received valve signal for sudden pressure decrease information. After the valve signal including the sudden pressure decrease information is received with more frames than normal, when a new valve signal is received including the same valve ID as that in the valve signal including the sudden pressure decrease information and the new valve signal indicates an increase in air pressure, a registration unit (4f) determines that the valve signals were transmitted from the tire of the vehicle and registers the valve ID.

## Description

The present invention relates to a valve ID registration system for use with a tire pressure monitoring system.

A tire pressure monitor system (TPMS) may be installed in a vehicle to monitor and check for abnormalities in the air pressure and temperature of tires based on signals obtained through wireless communication from a sensor arranged in each tire of the vehicle. The sensors, which detect the air pressure and temperature of the corresponding tires when the vehicle is traveling, are each formed integrally with a tire valve (refer to, for example, Japanese Laid-Open Patent Publication No. 2003-335115).

A tire valve for a tire pressure monitoring system such as that described above includes a transmitter that transmits, on a wireless signal, detection information such as the air pressure and temperature detected by a corresponding sensor. The vehicle includes a receiver and a controller. The receiver receives the wireless signal that includes the detection information from the transmitter. The controller generates a warning when there is an abnormality in the air pressure or temperature. In most cases, the transmitter is incorporated in the tire valve.

The tire pressure monitoring system transmits a wireless signal that includes valve identification information (valve ID) from the transmitter of a tire valve. Then, the tire pressure monitoring system determines whether or not the received wireless signal is one that was transmitted from a tire valve belonging to the vehicle. The controller of the tire pressure monitoring system determines whether or not the valve ID in the received wireless signal conforms to a registered valve ID. When the valve ID in the received wireless signal conforms to the registered valve ID, the controller indicates the air pressure, temperature, and the like on a display based on the detection information in the wireless signal. When there is an abnormality in the air pressure, temperature, or the like, the controller generates a warning.

The tire pressure monitoring system is required to register the valve IDs of the tires mounted on the vehicle to the controller to authenticate the valve IDs. Japanese Laid-Open Patent Publication No. 2004-74923 describes an example of a valve ID registration system that transmits a valve signal including a valve ID and sudden pressure decrease information from a tire valve, for example, when the air pressure of the corresponding tire is suddenly decreased, such as when air is intentionally released from the tire. The valve ID registration system identifies the tire valve when receiving the valve signal that includes the sudden pressure decrease information and registers the valve ID that is included in the valve signal to the vehicle.

A first vehicle that registers a valve ID transmitted when the air pressure of a tire suddenly changes in such a manner may be located near a second vehicle that registers valve IDs in the same manner. In such a case, a tire valve of the second vehicle transmits a valve signal when a sudden change is detected in the air pressure of the corresponding tire. Thus, the first vehicle may erroneously register the valve ID of the second vehicle. As a result, there is a demand for a valve ID registration system that ensures the registration of valve IDs for tires belonging to the corresponding vehicle.

One aspect of the present invention is a valve ID registration system for use with a tire pressure monitoring system that monitors air pressure of a tire mounted on a vehicle. The valve ID registration system uses a valve signal including air pressure information transmitted from a tire valve coupled to the tire, and the valve ID registration system registers a valve ID of the tire valve included in the valve signal to a controller arranged in the vehicle. The valve ID registration system includes a sudden pressure decrease detector that detects a sudden pressure decrease in the tire. A transmission unit transmits the valve signal. When the sudden pressure decrease detector detects a sudden pressure decrease, the transmission unit is configured to transmit the valve signal, which includes sudden pressure decrease information, with more frames than normal. A receiver receives the valve signal. A sudden pressure decrease monitoring unit monitors whether or not the received valve signal includes the sudden pressure decrease information. A frame number monitoring unit monitors a frame number of the received valve signal. A pressure increase monitoring unit monitors whether or not a pressure increase has occurred in the tire after the sudden pressure decrease. A registration unit registers the valve ID in a registration mode. After the valve signal including the sudden pressure decrease information is received with more frames than normal in the registration mode, when a new valve signal is received including a valve ID that is the same as the valve ID in the valve signal including the sudden pressure decrease information, and the new valve signal includes air pressure information indicating an increase in air pressure, the registration unit determines that the valve signals were transmitted from the tire of the vehicle and registers the valve ID.

The present invention provides a valve ID registration system that ensures the registration of valve IDs for tires belonging to the corresponding vehicle.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram of a tire pressure monitoring system according to one embodiment of the present invention;
Fig. 2 is a schematic diagram showing a detection signal in the embodiment of Fig. 1;
Fig. 3 is a time chart showing the received data and operation of a controller during valve ID registration in the embodiment of Fig. 1;
Fig. 4 is a sequence chart showing the operation of a valve ID registration system during valve ID registration in the embodiment of Fig. 1;
Fig. 5 is a flowchart showing the operation of the valve ID registration system during valve ID registration in the embodiment of Fig. 1; and
Fig. 6 is a flowchart showing the operation of the valve ID registration system during valve ID registration in the embodiment of Fig. 1.

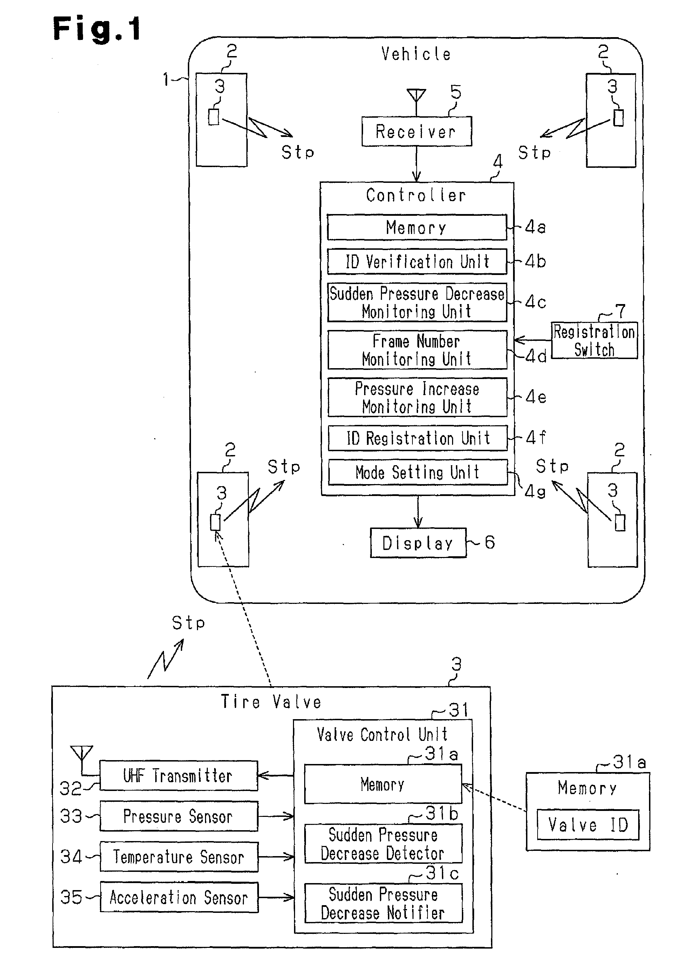

A tire pressure monitoring system (TPMS) for a vehicle according to one embodiment of the present invention will now be described with reference to Figs. 1 to 6. The tire pressure monitoring system monitors the tires of the vehicle to check for abnormalities in the air pressure and the like by detecting the air pressure and the like of the tires.

As shown in Fig. 1, a vehicle 1 includes four tires 2. Each tire 2 includes a tire valve 3, which detects the air pressure and the like of the corresponding tire 2 and transmits a wireless signal. Further, the tire valve 3 includes a valve control unit 31 that controls the operation of the tire valve 3. The valve control unit 31 is connected to a UHF transmitter 32 that transmits a detection signal Stp, which includes the air pressure and the like of the corresponding tire 2, on a radio wave in an ultrahigh frequency (UHF) band (approximately, 315 MHz). The valve control unit 31 includes a memory 31 a, which stores a valve ID.

The tire valve 3 also includes a pressure sensor 33, which detects the air pressure of the corresponding tire 2, a temperature sensor 34, which detects the temperature of the corresponding tire 2, and an acceleration sensor 35, which detects the acceleration in the radial direction applied to the corresponding tire 2. The sensors 33 to 35 provide detection signals to the valve control unit 31.

The detection signal Stp transmitted by the UHF transmitter 32 includes the air pressure, temperature, and unique ID (valve ID) of the corresponding tire 2. The UHF transmitter 32 of each tire valve 3 transmits the detection signal Stp when the corresponding acceleration sensor 35 detects acceleration.

A controller 4 is arranged on a vehicle body to control the tire pressure monitoring system. The controller 4 includes a memory 4a. Valve IDs of the tire valves 3 are registered to the memory 4a. Further, the controller 4 includes an ID verification unit 4b that verifies each valve ID.

The controller 4 is connected to a receiver 5 that receives the detection signal Stp that is transmitted from the tire valve 3 of each tire 2 and includes the air pressure and the like of the corresponding tire 2. In Japan, the detection signal Stp can be received on the UHF band radio wave (approximately, 315 MHz). The receiver 5 is arranged on the vehicle body. The controller 4 is also connected to a display 6, which allows for a driver to visually check the air pressure and the like of the tires 2. The display 6 is arranged in the vehicle 1 near the driver seat.

When the receiver 5 receives a detection signal Stp, the receiver 5 provides the controller 4 with a valve ID and detection information that are included in the detection signal Stp. The controller 4 performs ID verification on the valve ID included in the detection signal Stp. When the ID verification is accomplished, the controller 4 recognizes the detection signal Stp as one from a tire valve 3 registered to the vehicle 1. Then, the controller 4 compares the air pressure of the tire 2 included in the detection signal with a low pressure threshold to determine whether or not the tire air pressure is low.

When determining whether or not the tire air pressure is low, the controller 4 sets the low pressure threshold based on the tire temperature included in the detection signal Stp. This allows for the setting of a low pressure threshold that is suitable for the tire air pressure, which increases as the tire temperature increases. The controller 4 shows the determination result of the comparison between the tire air pressure and the low pressure threshold on the display 6. Further, when there is an abnormality in the air pressure or temperature of the tire 2, the controller 4 indicates such a situation on the display 6 or issues a warning. The controller 4 repeats such operation whenever the receiver 5 receives a detection signal Stp from a tire valve 3.

The tire pressure monitoring system of the present example includes a valve ID registration system that registers the valve ID of the tire valve 3 arranged in each tire 2 to the controller 4. When the tire air pressure suddenly decreases, the tire pressure monitoring system transmits the detection signal Stp including sudden pressure decrease information (sudden pressure decrease bit set to "1") with more frames than normal (normal mode that obtains tire air pressure information). The valve ID registration system registers the valve ID when the tire air pressure increases after suddenly decreasing and the number of frames increases when the tire air pressure is suddenly decreased.

When the air pressure of the corresponding tire suddenly decreases, the tire valve 3 of the present example uses more frames that normal to transmit the detection signal Stp, which includes sudden pressure decrease information indicating that the tire air pressure has suddenly decreased, regardless of whether or not acceleration is detected. The tire valve 3 transmits the detection signal Stp including the sudden pressure decrease information for a predetermined time after the tire air pressure suddenly decreases.

The controller 4 of the vehicle 1 constantly monitors whether or not the detection signal Stp transmitted from each tire valve 3 includes sudden pressure decrease information. The controller 4 also monitors the number of frames of the detection signals Stp that includes sudden pressure decrease information. In an ID registration mode, when the controller 4 receives a detection signal Stp including sudden pressure decrease information with more frames than normal and then receives a new detection signal Stp including air pressure information indicating that the tire air pressure has increased, the controller 4 registers the valve ID included in the detection signal Stp as a valve ID of a tire 2 mounted on the corresponding vehicle 1.

The valve control unit 31 of the tire valve 3 includes a sudden pressure decrease detector 31 b, which detects sudden decreases in the pressure detected by the pressure sensor 33. The sudden pressure decrease detector 31 b obtains pressure information from the pressure sensor 33, compares the previous pressure with the present pressure, and detects a sudden pressure change when the difference between the previous pressure and present pressure is large. When detecting a sudden pressure decrease, the sudden pressure decrease detector 31 b stores the sudden pressure decrease information in the memory 31a. A bit representing sudden pressure decrease information (sudden pressure decrease bit) is allocated to the memory 31 a. For example, when the sudden pressure decrease bit is "1", this indicates that a sudden pressure decrease has occurred. When the sudden pressure decrease bit is "0", this indicates that a sudden pressure decrease has not occurred. Here, a state in which the sudden pressure decrease bit is "1" is referred to as the sudden pressure decrease bit being ON.

Further, the valve control unit 31 includes a sudden pressure decrease notifier 31c that notifies the vehicle 1 of the sudden pressure decrease detected by the sudden pressure decrease detector 31b. The sudden pressure decrease notifier 31c includes sudden pressure decrease information in a detection signal Stp. Then, the UHF transmitter 32 transmits the detection signal Stp, which includes the sudden pressure decrease information, the valve ID, and detection information such as the air pressure, from the tire valve 3 to the vehicle 1. When the sudden pressure decrease detector 31 b detects a sudden pressure decrease, the sudden pressure decrease notifier 31c intermittently transmits the detection signal Stp, which includes the sudden pressure decrease information, for a predetermined time (several hours).

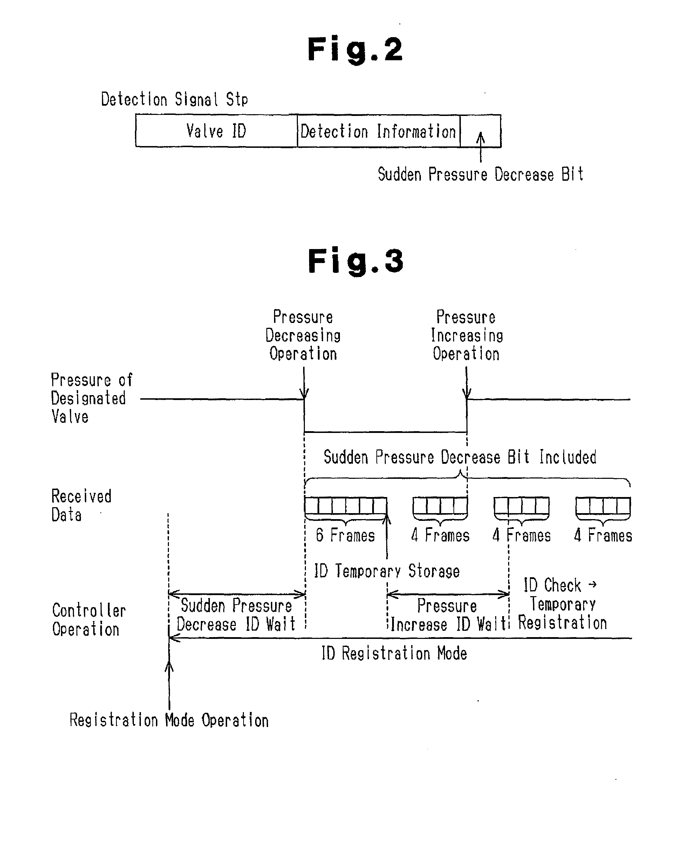

More specifically, referring to Fig. 2, the detection signal Stp includes a bit representing sudden pressure decrease information (sudden pressure decrease bit). For example, when the sudden pressure decrease bit is "1", this indicates that a sudden pressure decrease has occurred. When the sudden pressure decrease bit is "0", this indicates that a sudden pressure decrease has not occurred. Here, a state in which the sudden pressure decrease bit is "1" is referred to as the sudden pressure decrease bit being ON. The sudden pressure decrease notifier 31c and the UHF transmitter 32 form a transmission unit.

Referring to Fig. 3, the valve control unit 31 transmits the detection signal Stp to the UHF transmitter 32 using a set of frames. Each frame includes the valve ID, the detection information, and the sudden pressure decrease bit. In the illustrated example, the detection signal Stp is normally transmitted with a set of four frames. However, when the tire air pressure suddenly decreases, the valve control unit 31 transmits the detection signal Stp to the UHF transmitter 32 with more frames that normal. In the illustrated example, when the air pressure suddenly decreases, the detection signal Stp is transmitted with a set of six frames.

Referring to Fig. 1, the controller 4 includes a sudden pressure decrease monitoring unit 4c that constantly monitors whether or not the sudden pressure decrease bit included in the detection signal Stp is ON regardless of the operation mode of the controller 4. When the sudden pressure decrease monitoring unit 4c receives the detection signal Stp from each tire valve 3, the sudden pressure decrease monitoring unit 4c checks whether or not the sudden pressure decrease bit in the detection signal Stp is ON, or "1". When the sudden pressure decrease bit is ON, the sudden pressure decrease monitoring unit 4c determines that a sudden pressure decrease has occurred.

The controller 4 includes a frame number monitoring unit 4d that monitors the number of frames, or frame number, of the detection signal Stp during the registration mode. The frame number monitoring unit 4d checks the frame number of the detection signal Stp received by the receiver 5.

Further, the controller 4 includes a pressure increase monitoring unit 4e that monitors whether or not the air pressure in the detection information of the detection signal Stp has increased from when detecting a sudden pressure decrease during the registration mode. After the sudden pressure decrease monitoring unit 4c detects a sudden pressure decrease, the pressure increase monitoring unit 4e checks whether or not the air pressure in the detection information of the detection signal Stp received by the receiver 5 has increased from when detecting the sudden pressure decrease. When the air pressure in the detection information of the detection signal Stp has increased, the pressure increase monitoring unit 4e determines that a pressure increase has occurred.

The controller 4 also includes an ID registration unit 4f that registers valve IDs to the memory 4a. When the ID registration unit 4f determines that the valve ID in the received detection signal Stp is the valve ID of a tire 2 mounted on the corresponding vehicle 1, the ID registration unit 4f registers the valve ID of the detection signal Stp to the memory 4a.

When the received detection signal Stp satisfies condition 1 and the frame number of the received detection signal Stp is five or greater, the valve ID and the detection information in the received detection signal Stp are temporarily stored in the memory 4a. Here, the temporarily stored valve ID and detection information are referred to as information A. The memory 4a may include a temporary storage memory such as a random access memory (RAM). Condition 1 refers to a state in which the received detection signal Stp includes a valve ID that differs from the valve ID temporarily stored in the memory 4a at the present moment, the sudden pressure decrease bit is ON, and the pressure value in the detection signal Stp is 100 kPa or greater.

Next, when the received detection signal Stp satisfies condition 2, the ID registration unit 4f temporarily registers the valve ID of the received detection information Stp to the memory 4a. Condition 2 refers to a state in which the sudden pressure decrease bit is ON and the pressure value in the detection signal Stp is increased by 20 kPa or greater from the pressure value of information A.

When the valve IDs of every one of the tires 2 mounted on the vehicle 1 are temporarily stored, the ID registration unit 4f registers the temporarily registered valves IDs to the memory 4a. The memory 4a may include a non-volatile memory such as an EEPROM.

In the ID registration mode, the ID registration unit 4f designates the tire valve 3 of the tire 2 that is to undergo a sudden pressure decrease. An instruction indicating the designated tire valve 3 is generated using a voice or the display 6.

The controller 4 further includes a mode setting unit 4g, which sets the operation mode of the tire pressure monitoring system. The mode setting unit 4g sets the operation mode to one of a normal mode, an ID registration mode, and an examination mode (special mode). The normal mode obtains the tire air pressure information transmitted from each tire valve 3. The ID registration mode registers the valve IDs of the tires 2 to the memory 4a. The examination mode examines the state of the tire pressure monitoring system. When a registration switch 7, which is arranged on the vehicle body, a registration tool (not shown), or the like is operated, the mode setting unit 4g sets the operation mode to the ID registration mode.

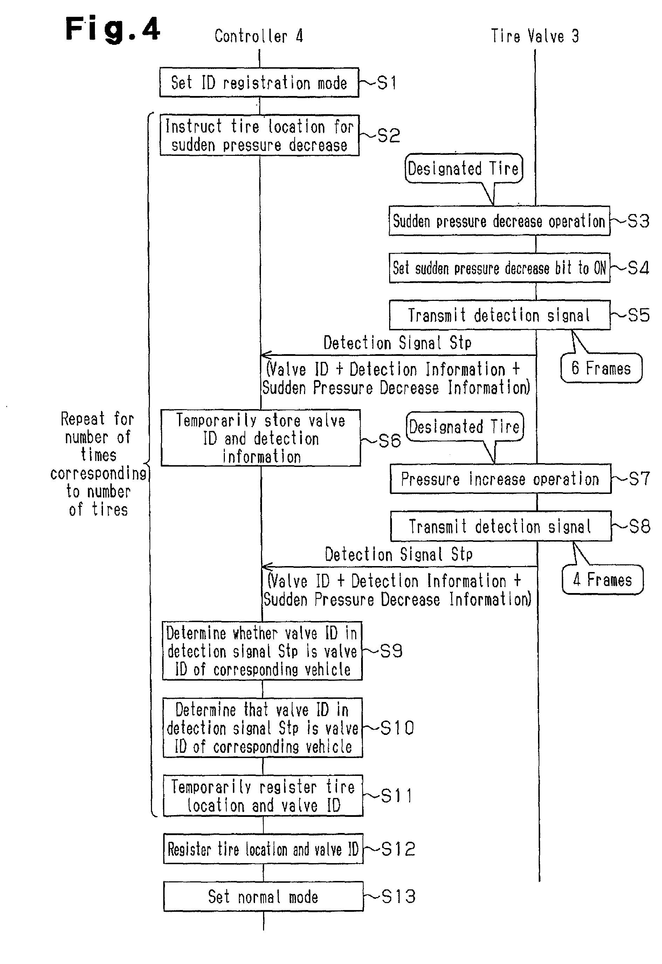

Valve ID registration performed by the valve ID registration system will now be described with reference to Figs. 3 and 4.

When the tires 2 are mounted on the vehicle 1, for example, in an automobile plant factory or a car dealer's shop, the registration switch 7 is operated. As a result, the controller 4 changes the operation mode from the normal mode to the ID registration mode to perform valve ID registration.

Referring to Fig. 4, the controller 4 sets the operation mode to the ID registration mode when the registration switch 7 is operated (step S1). More specifically, the mode setting unit 4g uses the operation of the registration switch 7 as a trigger and changes the operation mode from the normal mode to the ID registration mode. When the operation mode is set to the ID registration mode, the controller 4 starts a registration process. In the present example, the valve IDs for the four tires 2 mounted on the vehicle 1 are obtained and registered. Thus, the registration process is repeated to obtain the valve ID for each of the four tires 2.

Referring to Fig. 3, each tire valve 3 periodically transmits the detection signal Stp with a set of four frames. When the tire air pressure remains unchanged, the sudden pressure decrease bit in the detection signal Stp is OFF (i.e., "0"). The controller 4 periodically receives the set of four frames of the detection signal Stp from the tire valve 3. When the registration mode operation is performed and the operation mode is set to the ID registration mode, the controller 4 detects a sudden pressure decrease and a pressure increase in each tire 2. In this case, the controller 4 enters a sudden pressure decrease ID wait state and waits for the reception of a detection signal Stp including sudden pressure decrease information.

Referring to Fig. 4, after the registration process starts, the controller 4 instructs the location of the tire 2 at which a sudden pressure decrease should occur (step S2). More specifically, the ID registration unit 4f designates the tire valve 3 of the tire 2 that is to undergo a sudden pressure decrease and generates an instruction indicating the designated tire valve 3 using a voice or the display 6. The instruction of the tire location allows for the controller 4 to recognize which one of the tire valves 3 transmitted the detection signal Stp it received. Thus, the controller 4 can associate the valve ID and the tire location during the valve ID registration.

A technician, who is registering the valve IDs, performs a sudden pressure decreasing operation on the tire 2 located at the designated tire location (step S3). More specifically, the technician intentionally releases air from the tire 2. When the sudden pressure decreasing operation is performed, the corresponding tire valve 3 sets the sudden pressure decrease bit to ON (step S4). More specifically, the sudden pressure decrease detector 31b obtains pressure information from the pressure sensor 33 and, when detecting a sudden pressure decrease, sets the sudden pressure decrease bit to "1" and stores the sudden pressure decrease information in the memory 31 a.

The tire valve 3 transmits a six-frame detection signal Stp from the UHF transmitter 32 (step S5). More specifically, the sudden pressure decrease notifier 31c transmits a six-frame detection signal Stp that includes the detection information such as the air pressure, the valve ID, and sudden pressure decrease information. The sudden pressure decrease notifier 31c sets the sudden pressure decrease bit of the detection signal Stp to "1" to include the sudden pressure decrease information in the detection signal Stp.

Referring to Fig. 3, when a sudden pressure decrease occurs in a tire 2, the corresponding tire valve 3 transmits the detection signal Stp with a set of six frames. When the air pressure suddenly decreases, the detection signal Stp includes the sudden pressure decrease information, and the sudden pressure decrease bit of the detection signal Stp is set to "1".

Referring to Fig. 4, the controller 4 receives the detection signal Stp with the set of six frames including the sudden pressure decrease information. Then, the controller 4 temporarily stores the valve ID and detection information included in the detection signal (step S6). More specifically, the sudden pressure decrease monitoring unit 4c determines that the detection signal Stp includes the sudden pressure decrease information (sudden pressure decrease bit set to "1 "). Further, the frame number monitoring unit 4d determines that the frame number of the detection signal Stp is five or greater and thus more than the normal frame number of four. When the received detection signal Stp satisfies condition 1 and includes five or more frames, the ID registration unit 4f temporarily stores the valve ID and detection information of the received detection signal Stp to the memory 4a.

Referring to Fig. 3, when the valve ID is temporarily stored, the controller 4 detects a pressure increase in the corresponding tire 2. That is, the controller 4 shifts to a pressure increase ID wait state and waits for the reception of a detection signal Stp including detection information indicating an increase in the tire air pressure.

Referring to Fig. 4, the technician, who is registering the valve IDs, performs a pressure increasing operation on the tire 2 at the designated tire location (step S7). More specifically, the technician charges air into the tire 2. The sudden pressure decrease detector 31 b obtains pressure information from the pressure sensor 33 and determines that a sudden pressure decrease is not occurring. The sudden pressure decrease detector 31 b keeps the sudden pressure decrease bit stored in the memory 31a set at "1" until a predetermined time elapses from the previously detected sudden pressure decrease.

The tire valve 3 transmits a four-frame detection signal Stp from the UHF transmitter 32 (step S8). More specifically, the sudden pressure decrease notifier 31c transmits a four-frame detection signal Stp including detection information of the air pressure or the like, the valve ID, and the sudden pressure decrease information.

Referring to Fig. 3, when the air pressure of the tire 2 increases, the tire valve 3 transmits the detection signal Sp with a set of four frames. In this case, the predetermined time has not elapsed from when the air pressure was suddenly decreased. Thus, the detection signal Stp includes the sudden pressure detection information and the sudden pressure decrease bit is "1".

Referring to Fig. 4, the controller 4 determines whether or not the valve ID included in the received detection signal Stp corresponds to the vehicle 1 (step S9). More specifically, the pressure increase monitoring unit 4e determines whether or not the air pressure of the detection information in the detection signal Stp has increased from the previous air pressure. Further, the ID registration unit 4f determines whether or not the received detection signal Stp satisfies condition 2.

When the controller 4 determines that the valve ID included in the received detection signal Stp corresponds to the vehicle 1 (step S10), the controller 4 temporarily registers the tire location and the valve ID (step S11). More specifically, when the received detection signal Stp satisfies condition 2, the ID registration unit 4f temporarily registers the valve ID included in the received detection signal Stp to the memory 4a. Referring to Fig. 3, when determined that the valve ID included in the received detection signal Stp corresponds to the vehicle 1, the valve ID is temporarily registered. This registration process is repeated for the same number of times as the number of the tires 2 mounted on the vehicle 1.

Referring to Fig. 4, the controller 4 registers the tire location and the valve ID (step S12). More specifically, when the valve IDs of all of the tires 2 mounted on the vehicle 1 are temporarily registered, the temporarily registered valves ID are registered to the memory 4a.

When the registration process ends, the controller 4 sets the operation mode to the normal mode (step S13). More specifically, the mode setting unit 4g changes the operation mode from the ID registration mode to the normal mode. When the controller 4 changes the operation mode to the normal mode, the controller 4 recognizes from the registered valve ID that the tire valve 3 corresponds to the vehicle 1 and monitors the air pressure of the tire 2 that includes the recognized tire valve 3.

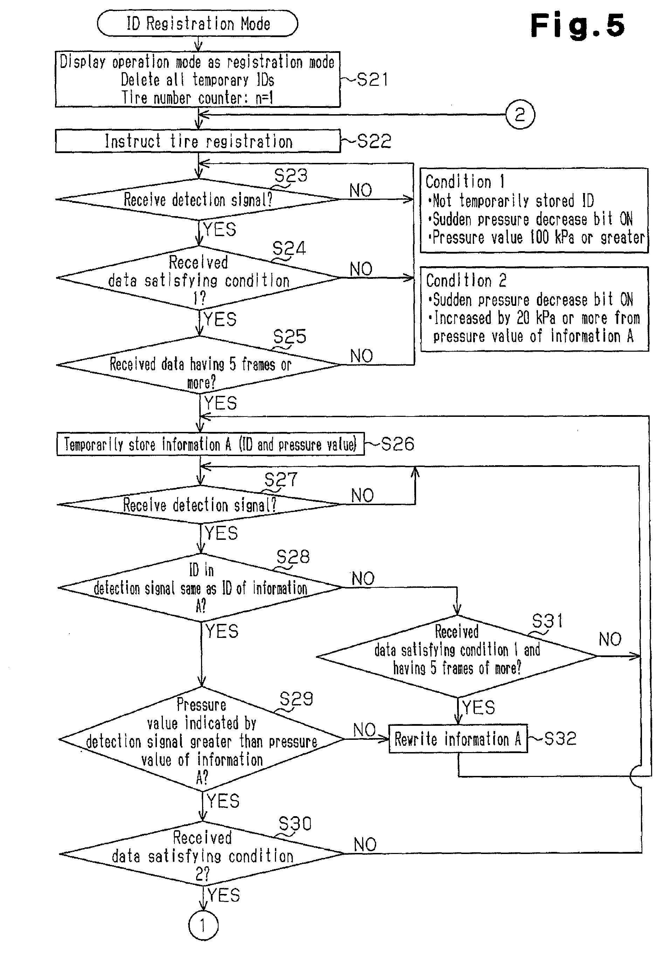

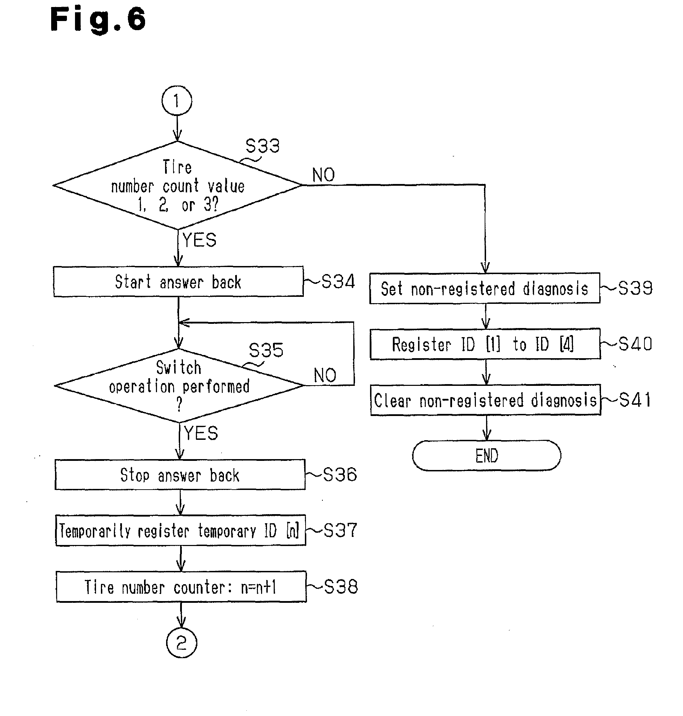

The operation of the controller 4 in the valve ID registration system will now be described with reference to Figs. 5 and 6. The processing performed when the operation mode of the controller 4 is set to the ID registration mode will now be described.

Referring to Fig. 5, when the operation mode is set to the ID registration mode, the controller 4 shows on the display 6 that the operation mode is the registration mode, deletes each temporary ID presently registered to the memory 4a, and sets the count value n of a tire number counter to "1" (step S21). Further, the controller 4 instructs the tire 2 that is to be registered (step S22).

When a sudden pressure decreasing operation is performed, the detection signal Stp is transmitted. The controller 4 determines whether or not the receiver 5 has received the detection signal Stp (step S23). When the controller 4 determines that the receiver 5 has not received the detection signal Stp (step S23: NO), the controller 4 waits until receiving the detection signal Stp. For example, when the technician has not performed a pressure decreasing operation, the receiver 5 of the vehicle 1 does not receive the detection signal Stp.

When the controller 4 determines that the receiver has received the detection signal transmitted after the pressure decreasing operation (step S23: YES), the controller 4 determines whether or not the received data of the detection signal Stp satisfies condition 1 (step S24). When the controller 4 determines that the received data completely satisfies condition 1 (step S24: NO), the controller 4 returns to step S23 and waits until the receiver 5 receives the next detection signal Stp. The received data does not satisfy condition 1, for example, when the receiver 5 receives a detection signal Stp from another tire valve 3 or when the receiver 5 receives a detection signal Stp from the tire valve 3 of a flat tire 2.

When the controller 4 determines that the received data completely satisfies condition 1 (step S24: YES), the controller 4 determines whether or not the frame number of the received detection signal Stp is five or greater (step S25). When the controller 4 determines that the frame number of the received detection signal Stp is not five or greater (step S25: NO), the controller 4 returns to step S23 and waits until the receiver 5 receives the next detection signal Stp. The received data is less than five frames, for example, when the receiver 5 receives a detection signal Stp from another tire valve 3.

When the controller 4 determines that the frame number of the received detection signal Stp is five or greater (step S25: YES), the controller 4 temporarily stores the valve ID and detection information included in the received detection signal Stp as information A (step S26). Here, the valve ID of information A is referred to as temporary ID [n]. Then, when a pressure increasing operation is performed, the detection signal Stp is transmitted. The controller 4 determines whether or not the receiver 5 has received the detection signal Stp (step S27). When the controller 4 determines that the receiver 5 has not received the detection signal Stp (step S27: NO), the controller 4 undergoes step S27 again and waits until the receiver 5 receives the detection signal Stp.

When the controller 4 determines that the receiver 5 has received the detection signal Stp (step S27: YES), the controller 4 determines whether or not the valve ID of the received detection signal Stp is the same as the valve ID of temporarily stored information A (step S28). When the controller 4 determines that the valve ID of the received detection signal Stp is not the same as the valve ID of information A (step S28: NO), the controller 4 determines whether or not the received data satisfies condition 1 and whether or not the frame number is five or greater (step S31). The valve ID of the detection signal Stp differs from the valve ID of temporarily stored information A, for example, when the detection signal Stp is received from another tire valve 3.

When the controller 4 determines that the received data does not satisfy condition 1 and that the frame number is not five or greater (step S31: NO), the controller 4 returns to step S27 and waits until the receiver 5 receives the detection signal Stp. The received data does not satisfy condition 1 and/or the frame number is not five or greater, for example, when the receiver 5 receives a detection signal Stp from another tire valve 3.

When the controller 4 determines that the received data satisfies condition 1 and that the frame number is five or greater (step S31: YES), the controller 4 rewrites information A with the detection information included in the detection signal Stp newly received in step S27. More specifically, the controller 4 determines that the memory 4a stored information of a tire valve 3 differing from the tire valve 3 that should be registered and rewrites information A with the information newly received in step S27. Then, the controller 4 returns to step S27 and waits until the receiver 5 receives the detection signal Stp.

In step S28, when the controller 4 determines that the valve ID of the received detection signal Stp is the same as the valve ID of information A (step S28: YES), the controller 4 determines whether or not the pressure value of the detection information included in the detection signal Stp newly received in step S27 is greater than the pressure value of information A (step S29). When the controller 4 determines that the pressure value of the detection information included in the detection signal Stp newly received in step S27 is not greater than the pressure value of information A (step S29: NO), the controller 4 proceeds to step S32. The receiver 5 of the vehicle 1 does not receive the detection signal Stp, for example, when the technician is continuing the pressure decreasing operation or when the technician has not yet performed the pressure increasing operation.

When the controller 4 determines that the pressure value of the detection information included in the detection signal Stp newly received in step S27 is greater than the pressure value of information A (step S29: YES), the controller 4 determines whether or not the received data satisfies condition 2 (step S30). When the controller 4 determines that the received data does not satisfy condition 2 (step S30: NO), the controller 4 returns to step S27 and waits until the receiver 5 receives the detection signal Stp. The received data does not satisfy condition 2, for example, when the technician has not sufficiently performed the pressure increasing operation.

When the controller 4 determines that the received data satisfies condition 2 (step S30: YES), the controller 4 proceeds to step S33.

Referring to Fig. 6, in step S33, the controller 4 determines whether or not the count value n of the tire number counter is any one of 1, 2, or 3 (step S33). When the controller 4 determines that the count value n of the tire number counter is 1, 2, or 3 (step S33: YES), the controller 4 starts an answer back to notify the technician that the next tire registration will be performed.

The controller 4 determines whether or not the technician has operated the registration switch 7 in response to the answer back (step S35). When the registration switch 7 has not been operated (step S35: NO), the controller 4 waits until the registration switch 7 is operated. The registration switch 7 is not operated, for example, when the technician does not notice the answer back.

When the registration switch 7 is operated (step S35: YES), the controller 4 stops the answer back (step S36). Then, the controller 4 temporarily registers the temporarily stored valve ID in the memory as a temporary ID [n]. Here, n is the count value of the tire number counter. Then, the controller 4 sets the count value n of the tire number counter as n=n+1 (step S38).

In step S33, when the controller 4 determines that the count value n of the tire number counter is not any one of 1, 2, and 3 (step S33: NO), that is, when the controller 4 determines that n=4 is satisfied (step S33: NO), the controller 4 sets a non-registered diagnosis serving as failure examination information indicating that a valve ID is not stored in the memory 4a (step S39). Then, the controller 4 registers the temporarily registered valve ID [1] to valve ID [4] in the memory 4a (step S40). Subsequently, the controller 4 clears the non-registered diagnosis serving as failure examination information (step S41) and ends the registration process.

When a sudden pressure decreasing operation is performed, the tire valve 3 transmits a detection signal Stp including sudden pressure decrease information with more frames than normal. Further, when a pressure increasing operation is performed, the tire valve 3 transmits a detection signal Stp including detection information indicating that the present air pressure of the corresponding tire 2 has increased from the previously detected air pressure with the normal number of frames. The controller 4 registers, to the memory 4a, the valve ID of the detection signal Stp received when determining that a sudden pressure decrease has occurred, the frame number has increased, and a pressure increase has occurred. Thus, during the registration process of the valve ID, even when a detection signal including sudden pressure decrease information transmitted from another vehicle is received by the receiver 5, the controller 4 can distinguish a detection signal Stp transmitted from a tire valve 3 of the corresponding vehicle 1 from a detection signal transmitted from another vehicle. This ensures the registration of the valve IDs mounted on the corresponding vehicle 1.

The valve ID registration system has the advantages described below.
(1) Each tire valve 3 transmits a detection signal Stp that includes sudden pressure decrease information, which indicates that the air pressure of the corresponding tire 2 has suddenly decreased, with more frames than normal. Further, after the controller 4 sets the operation mode to the registration mode, the tire valve 3 undergoes a sudden pressure decrease operation and a pressure increase operation. Thus, in the registration mode, the receiver 5 receives a detection signal Stp including sudden pressure decrease information with more frames than normal. Then, the receiver 5 receives a new detection signal Stp including air pressure information indicating that the air pressure has increased. The controller 4 determines that this detection signal Stp is from a tire 2 mounted on the corresponding vehicle 1 and registers the valve ID that is included in the detection signal. This ensures registration of the valve ID of the tire 2 mounted on the corresponding vehicle 1.
(2) When a detection signal Stp, which includes sudden pressure decrease information, is received with more frames than normal, the valve ID and air pressure information are temporarily stored. Thus, the valve ID and air pressure information of the tire 2 in which a sudden pressure decrease occurs can first be recognized. Then, when a new detection signal Stp received next includes a valve ID that is the same as the temporarily stored valve ID and the new detection signal Stp indicates an air pressure that is increased from the temporarily stored air pressure, the valve ID is registered. Accordingly, by just checking the valve ID, the controller 4 can easily determine whether or not the detection signal Stp includes a valve ID that should be registered.
(3) When a valve ID included in a detection signal Stp conforms to a temporarily stored valve ID and the air pressure indicated by the air pressure information in the detection signal Stp is not greater than the temporarily stored air pressure, the valve ID and air pressure information in the detection signal Stp are temporarily stored again. Thus, after the ID registration unit 4f temporarily stores the air pressure, there is no need to suspend the registration process when the corresponding tire 2 continuously undergoes a pressure decrease and the air pressure indicated by the detection signal Stp is not increased from the temporarily stored air pressure. The valve ID can be registered when a detection signal Stp indicating a greater air pressure than the temporarily stored air pressure is subsequently received.
(4) When a detection signal Stp including a valve ID, which differs from the temporarily stored valve ID, and sudden pressure decrease information is received with more frames than normal, temporary storing is performed again with the valve ID and air pressure information of the detection signal Stp. Thus, even when a detection signal is received from a tire that should not be registered, temporarily stored information can be corrected when a new detection signal Stp including sudden pressure decrease information is received with more frames than normal.
(5) A valve ID is not temporarily stored when the air pressure information in the detection signal Stp indicates the air pressure of a flat tire. Accordingly, the valve ID registration process can be stopped when receiving a detection signal Stp including sudden pressure decrease information indicating a sudden pressure decrease caused by a flat tire and not an intentional pressure decrease without checking for a pressure increase after the sudden pressure decrease.
(6) A number of valve IDs corresponding to the number of tires 2 mounted on the vehicle 1 are first temporarily stored. Then, the valve IDs are all registered. This ensures the registration of the valve IDs.
(7) The locations of the tire 2 are sequentially designated before a sudden pressure decreasing operation is instructed. Thus, during the valve ID registration, the designated tire location is associated with the valve ID. Accordingly, when monitoring the tire pressure of each tire 2, the location of the tire 2 having an abnormality can be recognized.
(8) After a sudden pressure decrease is detected, the detection signal Stp including sudden pressure decrease information is transmitted over a predetermined time. Thus, a detection signal Stp transmitted from a tire valve 3 of a tire 2 undergoing a pressure increase operation can be distinguished from the detection signal Stp including sudden pressure decrease information. As a result, the detection signal Stp transmitted from the tire valve 3 of the tire 2 that undergoes a pressure increasing operation can be distinguished more easily than checking the valve ID. Further, regardless of the valve ID registration, when driving the vehicle 1 from a state in the vehicle 1 is parked and a tire 2 is flat, the vehicle 1 receives a detection signal Stp including sudden pressure decrease information. Thus, the abnormality of the tire 2 can be notified to the vehicle 1.

It should be apparent to those skilled in the art that the present invention may be embodied in many other specific forms without departing from the spirit or scope of the invention. Particularly, it should be understood that the present invention may be embodied in the following forms.

In the above embodiment, a valve signal including sudden pressure decrease information is transmitted over a predetermined period from when a sudden pressure decrease is detected. Instead, a valve signal including sudden pressure decrease information may be transmitted only when a sudden pressure decrease is detected. This allows for recognition of when a sudden pressure decrease occurs.

In the system of the above embodiment, a sudden pressure decreasing operation is performed on a tire at an instructed location. However, the tire location does not have to be instructed when only an air pressure abnormality is notified. In this case, it is only required that a number of valve IDs corresponding to the number of tires 2 mounted on the vehicle 1 be obtained.

In the system of the above embodiment, the valve IDs are all registered after they are all temporarily registered. However, the valve IDs may all be registered without being all temporarily registered.

In the above embodiment, the air pressure of the received data being greater than the air pressure for a flat tire is included in condition 1. However, this may be deleted from condition 1.

In the system of the above embodiment, the sudden pressure decrease bit being set to ON is included in condition 2. However, this may be deleted from condition 2.

In the above embodiment, when a new detection signal is received with more frames than normal and includes sudden pressure decrease information and a valve ID that differs from the temporarily stored valve ID, temporary storage of the valve ID and air pressure information is performed again. However, the registration process may be completed when the valve ID in the new detection signal differs from the temporarily stored valve ID.

In the system of the above embodiment, when a valve ID in a new detection signal is the same as a temporarily stored valve ID, the valve ID is registered when the air pressure indicated by the new detection signal is increased from the temporarily stored air pressure. However, the valve ID may be registered under the condition that the valve ID in the new detection signal is the same as the temporarily stored valve ID when the air pressure indicated by the new detection signal is increased from the temporarily stored air pressure. In other words, step S28 may be reversed with steps S29 and S30.

In the system of the above embodiment, step S24 and step S25 may be reversed.

In the system of the above embodiment, the detection signal Stp has four frames under a normal state and six frames during a sudden pressure decrease. However, any number of frames may be set for each state as long as there are more frames during a sudden pressure decrease than a normal state.

In the system of the above embodiment, when necessary, the operation modes may include a failure read mode, which reads a failure location, or a rewrite mode, which rewrites the set value of data.

The system of the above embodiment may be used in parallel with an electronic key system, which performs communication with the vehicle 1, and a near field wireless communication system.

In the system of the above embodiment, the special mode may be a mode other than a failure read mode.

In the system of the above embodiment, the switching completion of an operation mode may be notified, for example, by an answer back.

In the system of the above embodiment, the sensors of the tire valve 3 are not limited to those described above. When necessary, the sensors may be changed, and other sensors may be added.

In the system of the above embodiment, the tire valve 3 does not have to transmit the detection signal Stp when the acceleration sensor 35 detects rotation of the tire 2. For example, the tire valve 3 may constantly transmit the detection signal Stp.

In the system of the above embodiment, the tire valve 3 does not necessarily have to transmit the detection signal Stp on the UHF band and may use other bands such as a low frequency (LF) band or a high frequency (HF) band.

In the system of the above embodiment, communication between the tire valve 3 and the receiver 5 is performed using radio waves on the UHF band. However, a different frequency band may be used.

In the above system, the receiver 5 may be integrally incorporated in the controller 4. Such a structure is also applicable to initialization and failure examination.

In the system of the above embodiment, the registration switch 7 is operated to set the operation mode to the ID registration mode. However, other procedures may be taken to set the ID registration mode.

The present examples and embodiments are to be considered as illustrative and not restrictive.

A valve ID registration system includes a sudden pressure decrease detector (31 b) that detects a sudden pressure decrease in the tire and a transmission unit (31c, 32) that transmits a valve signal. When the detector (31 b) detects a sudden pressure decrease, the transmission unit transmits the valve signal, which includes sudden pressure decrease information, with more frames than normal. A sudden pressure decrease monitoring unit (4c) monitors the received valve signal for sudden pressure decrease information. After the valve signal including the sudden pressure decrease information is received with more frames than normal, when a new valve signal is received including the same valve ID as that in the valve signal including the sudden pressure decrease information and the new valve signal indicates an increase in air pressure, a registration unit (4f) determines that the valve signals were transmitted from the tire of the vehicle and registers the valve ID.

## Claims

1. A valve ID registration system for use with a tire pressure monitoring system that monitors air pressure of a tire mounted on a vehicle, wherein the valve ID registration system uses a valve signal including air pressure information transmitted from a tire valve coupled to the tire, and the valve ID registration system registers a valve ID of the tire valve included in the valve signal to a controller arranged in the vehicle, the valve ID registration system **characterized by**:
a sudden pressure decrease detector that detects a sudden pressure decrease in the tire;
a transmission unit that transmits the valve signal, wherein when the sudden pressure decrease detector detects a sudden pressure decrease, the transmission unit is configured to transmit the valve signal, which includes sudden pressure decrease information, with more frames than normal;
a receiver that receives the valve signal;
a sudden pressure decrease monitoring unit that monitors whether or not the received valve signal includes the sudden pressure decrease information;
a frame number monitoring unit that monitors a frame number of the received valve signal;
a pressure increase monitoring unit that monitors whether or not a pressure increase has occurred in the tire after the sudden pressure decrease; and
a registration unit that registers the valve ID in a registration mode, wherein after the valve signal including the sudden pressure decrease information is received with more frames than normal in the registration mode, when a new valve signal is received including a valve ID that is the same as the valve ID in the valve signal including the sudden pressure decrease information, and the new valve signal includes air pressure information indicating an increase in air pressure, the registration unit determines that the valve signals were transmitted from the tire of the vehicle and registers the valve ID.

2. The valve ID registration system according to claim 1, **characterized in that**:
when the receiver receives the valve signal including the sudden pressure decrease information with more frames than usual, the registration unit is configured to temporarily store the valve ID and air pressure information, which indicates an air pressure, of the valve signal, and
when the receiver receives the new valve signal including a valve ID, which is the same as the temporarily stored valve ID, and the air pressure information of the new valve signal indicates an air pressure increased from the temporarily stored air pressure, the registration unit is configured to register the temporarily stored valve ID.

3. The valve ID registration system according to claim 2, **characterized in that** when the new valve signal including the same valve ID as the temporarily stored valve ID is received by the receiver and the air pressure information of the new valve signal indicates an air pressure decreased from the air pressure indicated by the temporarily stored air pressure information, the registration unit is configured to temporarily store the air pressure information again.

4. The valve ID registration system according to claim 2 or 3, **characterized in that** when the new valve signal includes a valve ID that differs from the temporarily stored valve ID and is received with more frames than normal by the receiver, the registration unit is configured to temporarily store again the valve ID and air pressure information of the new valve signal.

5. The valve ID registration system according to any one of claims 2 to 4, **characterized in that** when the air pressure information in the valve signal indicates an air pressure corresponding to a flat tire, the registration unit does not temporarily store the valve ID of the valve signal.

6. The valve ID registration system according to any one of claims 1 to 5, **characterized in that**:
the tire is one of a plurality of tires mounted on the vehicle,
the tire valve is coupled to each of the tires,
for each tire of the vehicle, the registration unit is configured to temporarily register the valve ID included in the valve signal when determining that the received valve signal is transmitted from the tire valve of the tire, and
when a number of the temporarily registered valve IDs is the same as the number of the tires mounted on the vehicle, the registration unit is configured to register all of the valve IDs.

7. The valve ID registration system according to any one of claims 1 to 6, **characterized in that**:
the tire is one of a plurality of tires mounted on the vehicle,
the tire valve is coupled to each of the tires,
in the registration mode, the registration unit sequentially designates a location of each of the tires and instructs a sudden pressure decrease operation to be performed to associate the designated tire location with the valve ID when registering the valve ID.

8. The valve ID registration system according to any one of claims 1 to 7, **characterized in that** the tire valve transmits the valve signal including the sudden pressure decrease information for a predetermined period after detecting the sudden pressure decrease.
